**Europäisches Patentamt**

**European Patent Office**

**Office européen des brevets**

(19)

(11) Veröffentlichungsnummer : **0 038 481**
**B1**

(12) # EUROPÄISCHE PATENTSCHRIFT

(45) Veröffentlichungstag der Patentschrift :
07.12.83

(51) Int. Cl.³ : **B 29 D 27/02, B 29 F 3/00**

(21) Anmeldenummer : **81102700.2**

(22) Anmeldetag : **09.04.81**

(54) **Verfahren und Vorrichtung zur Herstellung von Formteilen aus ungesättigten Polyesterharzen.**

(30) Priorität : **22.04.80 DE 3015417**

(43) Veröffentlichungstag der Anmeldung :
**28.10.81 Patentblatt 81/43**

(45) Bekanntmachung des Hinweises auf die Patenterteilung : **07.12.83 Patentblatt 83/49**

(84) Benannte Vertragsstaaten :
**BE DE FR GB IT NL SE**

(56) Entgegenhaltungen :
**CH-A- 460 324**
**FR-A- 2 143 281**
**FR-A- 2 255 328**
**GB-A- 772 344**
**GB-A- 1 038 313**
**GB-A- 1 070 948**
**US-A- 3 421 932**

(73) Patentinhaber : **BASF Aktiengesellschaft**
**Carl-Bosch-Strasse 38**
**D-6700 Ludwigshafen (DE)**

(72) Erfinder : **Gehrig, Heinz, Dr.**
**Spinozastrasse 30**
**D-6750 Kaiserslautern (DE)**
Erfinder : **Page, Norbert**
**Heinrich-Heine-Strasse 12**
**D-6700 Ludwigshafen (DE)**
Erfinder : **Scharz, Dieter**
**Wissmannstrasse 93**
**D-6700 Ludwigshafen (DE)**

Verfahren zur Vorrichtung und Herstellung von Formteilen aus ungesättigten Polyesterharzen

Die Erfindung betrifft ein Verfahren zur Herstellung von Formteilen oder Beschichtungen aus härtbaren Harzen nach dem Spritzverfahren, bei dem flüssiges Harz aus Düsen ausgepreßt, mit Verstärkungsfasern oder Füllstoffen zusammengebracht, auf einer Oberfläche aufgefangen und anschließend ausgehärtet wird, sowie eine Vorrichtung zur Durchführung dieses Verfahrens.

Die Verarbeitung von ungesättigten Polyesterharzen nach dem Faserspritzverfahren ist bekannt und wird seit langem erfolgreich praktiziert. Einzelheiten sind beispielsweise in der Monographie « Glasfaserverstärkte Kunststoffe », herausgegeben von Peter H. Selden, Springer-Verlag 1967, Seiten 548-552, beschrieben. Bei diesem Verfahren wird das styrolhaltige Harz mit einem Druck von 50 bis 100 bar, d. h. mit hoher Energie, aus Düsen ausgepreßt. Dabei entstehen feine Tröpfchen mit großer spezifischer Oberfläche, aus der verhältnismäßig viel Styrol pro Zeiteinheit verdunstet. Dies führt zu einer hohen Umweltbelastung, die auch bei Einbau von aufwendigen Absaugvorrichtungen in den Spritzkabinen nicht befriedigend behoben werden kann.

Ein ähnliches Hochdruck-Spritzverfahren, jedoch ohne Zusatz von Glasfasern, wird bei der Beschichtung von Flachdächern mit UP-Harzen zum Zweck der Abdichtung angewandt. Auch hierbei kommt es zu Umweltbelastungen durch verwehte Miktrotröpfchen der Reaktionskomponenten und durch Verdunstung.

In der US-A-3 421 932 ist ein Verfahren zur Herstellung von Überzügen oder Schaumstoffschichten, vorzugsweise aus Polyurethanen beschrieben, bei dem das Harz aus einer Düse aufgrund seines Eigengewichts austritt und als kohärenter, kontinuierlicher, freifallender Film auf einer horizontalen Oberfläche abgelegt wird. Mit diesem Verfahren ist es nicht möglich, Formteile oder Beschichtungen auf geneigten oder vertikalen Oberflächen herzustellen.

Der Erfindung lag nun die Aufgabe zugrunde, das bekannte Spritzverfahren so zu modifizieren, daß die Verdunstung der Reaktionskomponenten vermindert und damit die Umweltbelastung verringert wird.

Diese Aufgabe wird erfindungsgemäß dadurch gelöst, daß in Abwandlung des bekannten Spritzverfahrens das Harz mit einem Druck von 1 bis 20 bar aus Düsen ausgepreßt wird, bei denen in den Düsengrundkörper eine oder mehrere Reihen von fächerförmig auseinanderlaufenden Bohrungen angebracht sind, so daß sich das Harz nach dem Auspressen fächerförmig ausbreitet und als Strahlenbündel auf der Oberfläche auftrifft.

Bei einer bevorzugten Ausführungsform der Erfindung werden zwei miteinander reagierende Teilmengen des Harzes durch zwei Düsen ausgepreßt, die so angeordnet sind, daß die beiden Strahlenbündel in einem Winkel von ≤ 90° gegeneinander gerichtet sind und sich vor dem Auftreffen auf der Formoberfläche vereinigen.

Nach dem erfindungsgemäßen Verfahren werden vorzugsweise die üblichen ungesättigten Polyesterharze verarbeitet, die gewöhnlich 25 bis 50 Gew.% Styrol sowie die bekannten Peroxid-Härter und Cobalt- oder Aminbeschleuniger und gegebenenfalls weitere übliche Zusatzstoffe enthalten. Bei der Herstellung von Formkörpern werden dem Harz gehäckselte Verstärkungsfasern, vorzugsweise Glasfasern einer Länge von 10 bis 100 mm in Mengen von 20 bis 40 Gew.% zugemischt.

Bei der oben beschriebenen bevorzugten Ausführungsform wird das Harz in zwei mit Härter bzw. Beschleuniger versehene Teilmengen aufgeteilt. Es ist jedoch grundsätzlich auch möglich, das Harz mit Härter und Beschleuniger vorzumischen und dann nur durch eine Düse auszuspritzen. Man muß dann aber darauf achten, daß das vorgemischte Harz vor dem Auspressen aus der Düse nicht vorzeitig polymerisiert. Diese Gefahr ist beispielsweise dann nicht gegeben, wenn man statt Peroxid-Härter Lichtinitiatoren verwendet und das Formteil durch Belichtung aushärtet.

Die Harze werden mittels Pumpen oder druckbeaufschlagter Behälter im Bereich von 1 bis 20 bar, vorzugsweise 1 bis 10 bar zu den Düsen gefördert und ausgepreßt, wobei Preßluft zur Druckbeaufschlagung der Behälter dienen kann, nicht jedoch zu den Düsen geleitet wird.

Die Düsen sollen so konstruiert sein, daß das Harz bei dem angewandten Preßdruck nicht als Tröpfchenwolke, sondern als Strahlenbündel ausgepreßt wird.

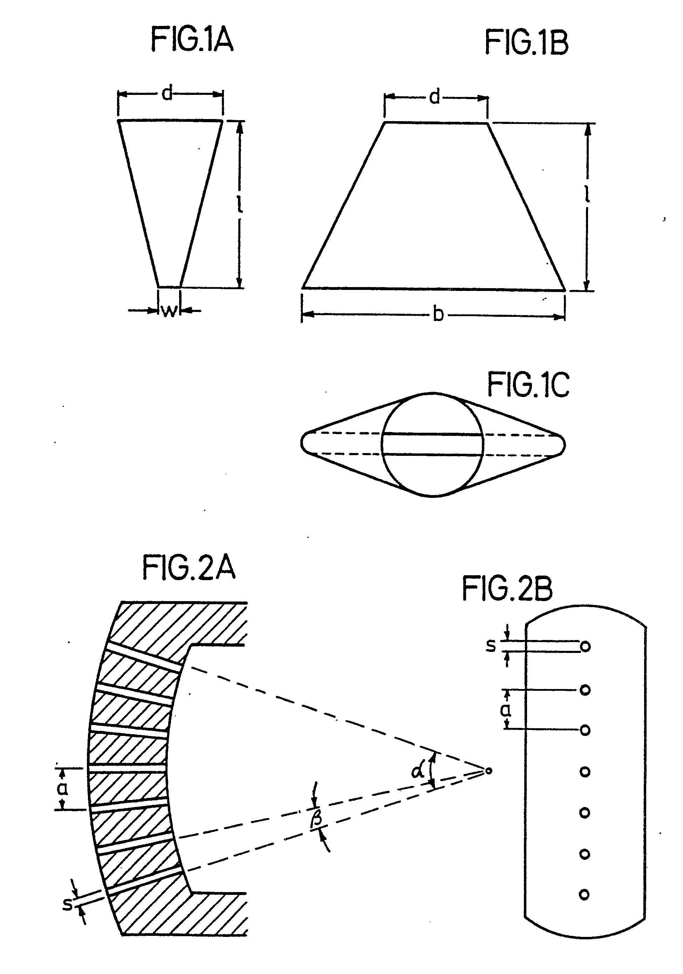

In Figur 1A-1C ist eine bevorzugte Ausführungsform einer Düse in Aufriß 1A, Seitenriß 1B und Grundriß 1C schematisch dargestellt. Der Eintrittsquerschnitt der Düse ist im wesentlichen kreisförmig, die Bohrungen für die Austrittsöffnungen sind schlitzförmig in einer Reihe angeordnet. Die einzelnen Öffnungen sind in Figur 1 nicht gezeichnet. Wesentlich ist, daß die Fläche des Eintrittsquerschnitts größer als die Summe der Flächen der Austrittsquerschnitte. Nur dann kann das durchgepreßte Harz die erforderliche Beschleunigung erhalten, um als fächerförmiges Strahlenbündel auszutreten. Der Durchmesser d der Eintrittsöffnung soll größer sein als die Weite w der Austrittsöffnungen, aber kleiner als die Breite b der Reihe der Bohrungen. Die Länge l der Düse ist vorzugsweise größer als der Durchmesser d der Eintrittsöffnung.

Die Düsen sind mehrfach unterteilt. Dies ist konstruktiv dadurch verwirklicht, daß in dem Düsengrundkörper eine oder mehrere Reihen von fächerförmig auseinanderlaufenden Bohrungen angebracht sind. In Figur 2A-B ist eine solche Düse in Seitenriß 2A und Grundriß 2B dargestellt, wobei der Einfachheit halber nur eine Reihe von Bohrungen eingezeichnet ist. Bevorzugt sind mehrere Reihen von Bohrungen, die gegeneinander versetzt sein können. Die Gesamtzahl der Bohrungen beträgt 5 bis 40, vorzugsweise 10 bis 30. Der Durchmesser s der Bohrungen liegt zwischen 0,3 und 3 mm, vorzugsweise zwischen 0,5 und 1,5 mm. Der Abstand a zwischen zwei benachbarten Bohrungen innerhalb einer Reihe beträgt a = 1,0 bis 3,0 s, vorzugsweise 1,5 bis 2,5 s. Der Winkel $\alpha$ zwischen den äußersten Bohrungen einer Reihe liegt zwischen 20° und 70°; der Winkel $\beta$ zwischen zwei benachbarten Bohrungen innerhalb einer Reihe ist geringer als 10°, vorzugsweise geringer als 8°.

Bei der erfindungsgemäßen Arbeitsweise wird das Harz nicht als Film, sondern als Bündel von zusammenhängenden Strahlen ausgepreßt. Dadurch wird die Verstopfungsanfälligkeit der Düsen herabgesetzt und es sind größere Abstände zwischen Düse und Formoberfläche möglich. Man kann auch nebeneinander zwei oder mehrere solcher Düsen anordnen, wobei man dann ein Netzwerk von Harzstrahlen erhält.

Die Viskosität des Harzes sollte zwischen 50 und 10 000 mPa.s liegen. Das Auspressen erfolgt bei einem so niedrigen Energieniveau, daß das Harz nicht in feine Tröpfchen zerstäubt wird, sondern zusammenhängende Strahlen bildet. Diese breiten sich infolge der Düsengeometrie fächerförmig aus. Nach einer freien Wegstrecke von etwa 10 bis 150 cm trifft das Strahlenbündel auf der Oberfläche auf. Falls nach der bevorzugten Ausführungsform der Erfindung mit zwei Teilmengen des Harzes gearbeitet wird, vereinigen sich die beiden Strahlenbündel vor dem Auftreffen auf der Oberfläche, wobei sie sich turbulent vermischen.

Bei der Herstellung von Formkörpern aus ungesättigten Polyesterharzen nach dem erfindungsgemäß verbesserten Verfahren werden die Verstärkungsfasern in Form von einem oder mehreren Rovings auf übliche Weise mittels eines luftbetriebenen Cutters gefördert und gehäckselt und auf das Strahlenbündel vor dessen Auftreffen auf der Formoberfläche aufgeblasen, wobei sie sich mit dem Harz vereinigen. Die auf die Formoberfläche aufgebrachte Mischung aus Harz und Fasern wird auf übliche Weise durch Anrollen, z. B. mit Walzen, entlüftet. Es hat sich gezeigt, daß dieses Anrollen, zusammen mit dem turbulenzerzeugenden Auftreffen auf der Formoberfläche, auch ausreicht, um bei der bevorzugten Ausführungsform die beiden Harzkomponenten hinreichend homogen miteinander und mit den Fasern zu vermischen.

Aus den erfindungsgemäßen Harzstrahlen verdunsten wesentlich weniger flüchtige organische Bestandteile als aus den feinen Tröpfchen, die bei dem Faserspritzverfahren nach dem Stand der Technik entstehen. Bei der Herstellung von Formkörpern aus ungesättigten Polyesterharzen hat es sich z. B. gezeigt, daß die Styrolbelastung der Umgebung auf etwa 10 bis 20 % der beim herkömmlichen Faserspritzen vorliegenden Werte erniedrigt werden kann, so daß auf den Einbau aufwendiger Absaugvorrichtungen verzichtet werden kann.

Nach dem Auftreffen auf der Oberfläche wird das härtbare Harz ausgehärtet. Dies kann durch Kalthärtung, oder — im Falle der Verwendung von Lichtinitiatoren — durch Bestrahlung geschehen. Die ausgehärteten Formteile bzw. Beschichtungen unterscheiden sich in ihren Eigenschaften, z. B. in der Barcol-Härte, nicht von solchen, die nach dem herkömmlichen Spritzverfahren hergestellt wurden. Das erfindungsgemäße Verfahren unterscheidet sich apparativ von dem herkömmlichen nur unwesentlich dadurch, daß spezielle Düsen mit Bohrungen für die Erzeugung des Strahlenbündels anstelle von Zerstäubungsdüsen für die Erzeugung von Tröpfchen verwendet werden. Es ist jedoch wesentlich umweltfreundlicher durchzuführen.

Nach dem erfindungsgemäß verbesserten Verfahren können aus ungesättigten Polyesterharzen vor allem großflächige, insbesondere gewölbte Formteile hergestellt werden, z. B. Bootskörper, Teile von Fahrzeugen und Flugzeugen, oder Container. Es eignet sich auch zur Herstellung von Beschichtungen, z. B. zum Abdichten von Flachdächern.

Die in den Beispielen genannten Prozente beziehen sich auf das Gewicht.

Beispiel 1

Es wurde ein ungesättigter Polyester auf der Basis von Maleinsäure, Orthophthalsäure und Standardglykolen, der in 35 % Styrol gelöst war, benutzt. Die Harzviskosität bei 23 °C betrug etwa 700 mPa.s. Um das Ablaufen des Harzes an einer senkrechten Wand zu verhindern, waren 0,8 % hochdisperse Kieselsäure als Thixotropiermittel zugesetzt. Das Harz wurde in zwei gleiche Teilmengen aufgeteilt, die eine versehen mit 2 % Cyclohexanon-Peroxid als Härter, die andere mit 0,2 % Cobaltnaphthenat als Beschleuniger. Um die Güte der Mischung auch visuell beurteilen zu können, war die eine Teilmenge zusätzlich mit Spuren eines blauen, die andere mit einem gelben Farbstoff versehen. Bei guter Durchmischung ist grün zu erwarten, bei schlechter sollten verschiedenfarbige Schlieren entstehen.

Der Spritzversuch wurde in einem normal belüfteten Raum ohne Zusatzabsaugung durchgeführt, wobei eine etwa 2 m² große Platte als horizontale und eine ebenso große zweite Platte als vertikale Auffangfläche im rechten Winkel zueinander aufgestellt wurden. Die Harzmischungen wurden mit einer herkömmlichen Zwillings-Kolbenpumpe (Durchsatz: 2·2,4 l/min) über Schlauchleitungen zu einem mit Fächerdüsen versehenen Spritzkopf gefördert. Dieser wurde von Hand zeilenweise über die Formoberfläche geführt, wobei der Abstand·von Düse zu Auffangfläche etwa 40 cm betrug. Die Breite der Düsenöffnungen betrug 0,4 mm; der Harzförderdruck 5 bar. Oberhalb der Fächerdüsen war ein herkömmlicher Cutter für die Glasfaserzuführung (1 Rovingstrang, Schnittlänge der gehäckselten Glasfasern etwa 40 mm) anmontiert. Die herzustellenden Platten wurden schichtweise in drei Lagen bis etwa 5 mm Dicke aufgebaut, wobei jeweils nach einer Lage kurz mit einem herkömmlichen Scheibenroller angewalzt, komprimiert und zwischenentlüftet wurde. Die fertig ausgehärteten Platten sind fast gleichmäßig grün gefärbt, was auf eine gute Durchmischung der Harz-Teilkomponenten hindeutet. Bei der Prüfung des Härteprofils ergeben sich sowohl im Niveau als auch in der Streuung die für herkömmlich hergestellte Laminate üblichen Werte.

Beispiel 2

Das defekte Flachdach eines Wohnhauses sollte saniert werden. Zu diesem Zweck wurde auf die alte Dachhaut ein Polyesterfaservlies ausgelegt, das mit einer UP-Harzmasse getränkt und ausgehärtet wurde. Dem UP-Harz wurde 1 % kolloidales Siliciumdioxid und 5 % einer Farbpaste zugesetzt. Diese Masse wurde in zwei gleiche Teile geteilt. Der einen Hälfte wurden als Härter 4 % Benzoylperoxid (50-%ig), der anderen Hälfte als Beschleuniger 6 % Dimethylanilin (10-%ig) zugegeben. Die beiden Harzkomponenten haben eine Viskosität von ca. 200 mPa.s bei 23 °C. Sie wurden in einer Mischvorrichtung gemischt und unmittelbar danach als Fächerstrahl mit einem Druck von 10 bar ausgepreßt und umweltschonend auf das Faservlies aufgebracht, bis es gut durchtränkt war. Nach einer Gelierzeit von ca. 25 min bei 23 °C begann die Aushärtung. Es wurde eine Dachhaut erhalten, die sich durch folgende Eigenschaften auszeichnet : monolithische Dachhaut ohne Klebenähte und Fugen, hohe Verschleißfestigkeit, geringe Anfälligkeit gegen mechanische Beschädigungen.

**Ansprüche**

1. Verfahren zur Herstellung von Formteilen oder Beschichtungen aus härtbaren ungesättigten Polyester-Harzen nach dem Spritzverfahren, bei dem flüssiges Harz durch Düsen ausgepreßt, mit Verstärkungsfasern oder Füllstoffen zusammengebracht, auf einer Oberfläche aufgefangen und anschließend ausgehärtet wird, dadurch gekennzeichnet, daß das Harz mit einem Druck von 1 bis 20 bar aus Düsen ausgepreßt wird, bei denen in dem Düsengrundkörper eine oder mehrere Reihen von fächerförmig auseinanderlaufenden Bohrungen angebracht sind, sodaß sich das Harz nach dem Auspressen fächerförmig ausbreitet und als Strahlenbündel auf der Oberfläche auftrifft.

2. Verfahren nach Anspruch 1, dadurch gekennzeichnet, daß zwei miteinander reagierende Teilmengen des Harzes durch zwei Düsen ausgepreßt werden, die so angeordnet sind, daß die beiden Strahlenbündel in einem Winkel ⩽ 90° gegeneinander gerichtet sind und sich vor dem Auftreffen auf der Oberfläche vereinigen.

3. Vorrichtung zur Durchführung des Verfahrens nach Anspruch 1 in Form einer Düse mit einer im wesentlichen kreisförmigen Eintrittsöffnung und mehreren, in einer oder mehreren Reihen angeordneten, fächerförmig auseinanderlaufenden Austrittsöffnungen, dadurch gekennzeichnet, daß die Fläche des Eintrittsquerschnitts größer ist als die Summe der Flächen der Austrittsquerschnitte, und daß der Durchmesser (d) der Eintrittsöffnung größer ist als die Weite (w) der Austrittsöffnungen, aber kleiner als die Breite (b) der Reihen.

4. Vorrichtung nach Anspruch 3, gekennzeichnet durch folgende Merkmale :

a) die Gesamtzahl der Bohrungen beträgt 5 bis 40,

b) der Durchmesser (s) der Bohrungen liegt zwischen 0,3 und 3 mm,

c) der Abstand (a) zwischen zwei benachbarten Bohrungen in einer Reihe beträgt 1 bis 3 (s),

d) der Winkel (α) zwischen den äußersten Bohrungen einer Reihe liegt zwischen 20° und 70°,

e) der Winkel (β) zwischen zwei benachbarten Bohrungen innerhalb einer Reihe ist geringer als 10°.

**Claims**

1. A process for the production of mouldings or coatings from curable unsaturated polyester resins by spraying, the liquid resin being forced out through nozzles, brought together with reinforcing fibers, or fillers, deposited on a surface and then cured, wherein the resin is forced out of a nozzle under a pressure of 1 to 20 bars, the body member of which nozzle has one or more rows of bores radiating outwardly like a fan, so that the resin, following its ejection, spreads out like a fan and impinges on the surface as a bundle of individual streams.

2. A process as claimed in claim 1, wherein two interreacting portions of the resin are forced out through two nozzles which are so arranged that the two bundles of individual streams form an angle of not more than 90°, and unite before they impinge on the surface.

3. A device for carrying out the process as claimed in claim 1, in the form of a nozzle having an essentially circular inlet orifice and a plurality of outlet orifices which are arranged in one or more rows and radiate outwardly like a fan, wherein the cross-sectional area of the inlet orifice is larger than the sum of the cross-sectional areas of the outlet orifices, and the diameter (d) of the inlet orifice is larger than the width (w) of the outlet orifices, but smaller than the length (b) of the rows.

4. A device as claimed in claim 3, characterized by the following features :

a) the total number of bores is 5 to 40 ;

b) the diameter (s) of the bores is from 0.3 to 3 mm ;

c) the distance (a) between two adjacent bores in a row is 1 to 3 (s) ;

d) the angle (α) formed by the outermost bores of a row is from 20° to 70° ; and

e) the angle (β) formed by two adjacent bores within a row is smaller than 10°.

## Revendications

1. Procédé de production de pièces moulées ou de revêtements en résines polyesters insaturées, durcissables, selon le procédé à injection, dans lequel une résine liquide est éjectée par des buses, réunie à des fibres de renforcement ou des charges, recueillie sur une surface et ensuite durcie, caractérisé par le fait que la résine est éjectée, à une pression de 1 à 20 bars, de buses dans le corps desquelles sont ménagées une ou plusieurs rangées d'alésages s'écartant les unes des autres en éventail, de telle sorte que la résine, après éjection, se répand en éventail et parvient sur la surface sous forme d'un faisceau rayonnant.

2. Procédé selon la revendication 1, caractérisé par le fait que deux portions de la résine, réagissant entre elles, sont éjectées par deux buses qui sont disposées de telle sorte que les deux faisceaux rayonnants se dirigent l'un vers l'autre sous un angle ⩽ 90° et se réunissent avant d'atteindre la surface.

3. Dispositif pour la mise en œuvre du procédé selon la revendication 1, sous forme de buse à orifice d'entrée sensiblement circulaire et à plusieurs orifices de sortie, disposées en une ou plusieurs rangées, et de directions s'écartant les unes des autres en éventail, caractérisé par le fait que la surface de la section d'entrée est supérieure à la somme des surfaces des sections de sortie et que le diamètre (d) de l'orifice d'entrée est supérieur au diamètre intérieur des orifices de sortie, mais inférieur à la largeur (b) des rangées.

4. Dispositif selon la revendication 3, caractérisé par les caractéristiques suivantes :

a) le nombre total des alésages est de 5 à 40,

b) le diamètre (s) des alésages est compris entre 0,3 et 3 mm,

c) la distance (a) entre deux alésages voisins dans une rangée est de 1 à 3 (s),

d) l'angle (α) entre les alésages extrêmes d'une rangée est compris entre 20° et 70°,

e) l'angle (β) entre deux alésages voisins, à l'intérieur d'une rangée, est inférieur à 10°.

## FIG.1A

## FIG.1B

## FIG.1C

## FIG.2A

## FIG.2B